# EUROPEAN PATENT SPECIFICATION

(11) **EP 4 690 148 B1**
(45) Date of publication and mention of the grant of the patent: **10.06.2026**
(21) Application number: 24716126.8
(22) Date of filing: 27.03.2024
(51) Int. Cl.: G06V 20/52, G06V 10/82, G06V 10/70, G06V 20/10, G06V 20/70, G06V 10/26, G06V 10/44, G06V 10/50, G06V 10/764, G06V 10/774, G06V 20/69

(54) **COMPUTER-IMPLEMENTED METHOD FOR DETECTING THE PRESENCE OF PARTICLES AND DETERMINING THE NUMBER OF PARTICLES IN A SOURCE IMAGE**
COMPUTERIMPLEMENTIERTES VERFAHREN ZUR ERKENNUNG DER ANWESENHEIT VON PARTIKELN UND BESTIMMUNG DER ANZAHL VON PARTIKELN IN EINEM QUELLBILD
PROCÉDÉ MIS EN OEUVRE PAR ORDINATEUR POUR DÉTECTER LA PRÉSENCE DE PARTICULES ET DÉTERMINER LE NOMBRE DE PARTICULES DANS UNE IMAGE SOURCE

(30) Priority: 31.03.2023 EP 23382316
(43) Date of publication of application: 11.02.2026
(73) Proprietor: Repsol, S.A., 28045 Madrid (ES); Itera Técnica, S.L.U., 36213 Vigo (ES)
(72) Inventor: PARRILLA GARCÍA, Carlos Gustavo, 36213 Vigo (ES); SANMINIATELLI SALAS, Luca, 28045 Madrid (ES); ROSENDE BARBOSA, Lorena, 36213 Vigo (ES); BENAOUALI, Narimane, 28045 Madrid (ES); LÓPEZ RODRÍGUEZ, Marcos, 36213 Vigo (ES); GIL CUESTA, Juan Antonio, 28045 Madrid (ES); LÓPEZ PAZOS, Guillermo, 36213 Vigo (ES); HIGGINS, George Adam, 36213 Vigo (ES); INFANTE RODAL, Francisco, 36213 Vigo (ES)
(74) Representative: Isern Patentes y Marcas S.L.
(86) International application number: PCT/EP2024/058283
(87) International publication number: WO 2024/200530

(56) References cited:
- EP-A1- 4 105 879
- JP-A- H05 303 642
- US-A1- 2022 277 546
- PHAN SAMANTHA ET AL: "Recent trends in marine microplastic modeling and machine learning tools: Potential for long-term microplastic monitoring", JOURNAL OF APPLIED PHYSICS, AMERICAN INSTITUTE OF PHYSICS, 2 HUNTINGTON QUADRANGLE, MELVILLE, NY 11747, vol. 133, no. 2, 11 January 2023 (2023-01-11), XP012271480, ISSN: 0021-8979, [retrieved on 20230111], DOI: 10.1063/5.0126358
- GARCIA-GARIN ODEI ET AL: "Automatic detection and quantification of floating marine macro-litter in aerial images: Introducing a novel deep learning approach connected to a web application in R", ENVIRONMENTAL POLLUTION, vol. 273, 1 March 2021 (2021-03-01), GB, pages 116490, XP093075253, ISSN: 0269-7491, DOI: 10.1016/j.envpol.2021.116490

## Description

### OBJECT OF THE INVENTION

The present invention relates to a method for detecting particles in a source image, a computing system for the implementation of the method and a device for detecting the presence of particles on a fluid surface; more particularly the invention is directed to a method capable of detecting the presence of leaked plastic pellets from a digital image at different points in the value chain, such as petrochemical plants, logistics centres or production facilities that use pellets. The invention allows for a reduction of uncontrolled dumping of pellets to the environment as well as an early identification of those spills which in turn help to proactively develop preventive measures.

### BACKGROUND OF THE INVENTION

Plastic pellets, also known as nurdles or beads, are small, roughly spherical or cylindrical solid polymeric particles produced in the industry for various purposes, notably as a raw material for plastic products production. While pellets are widely used in the industry, there are significant risks associated with their transportation and handling, which can lead to spills and environmental damage.

Pellets can spill during transportation, storage, and handling, causing contamination of soil, waterways, and other natural habitats. The spilled pellets can also pose a threat to wildlife and aquatic organisms, as they can be mistaken for food and ingested, leading to physical harm and death.

Moreover, plastic pellets are considered as primary microplastics, meaning that they were intentionally produced at sizes ranging from about 1 to about 5 mm in diameter, whereas secondary microplastics are created through photodegradation and weathering of larger pieces of plastic, like water bottles and fishing nets. It is believed that primary microplastics may be causing between 15% and 30% of the marine microplastic pollution; of these, pellets are the second largest source of microplastics in the ocean.

For example, a study on a polyethylene production facility in Sweden found that between 3 and 36 million of plastic pellets enter the environment from production sites every year. These nurdles spill during transportation and production and due to inadequate precautions and regulations, millions of pellets of plastic end up in nearby waterways and eventually the ocean.

In addition, pellets may release toxic chemicals when they come into contact with the environment. This can have long-term effects on the health of people and animals living in the surrounding areas. The environmental impact of pellet spills can be significant, and it can take years to clean up the affected areas, resulting in high costs for the industry and local governments.

Therefore, it is vital that companies across the entire plastics supply chain (production, handling, transportation, storage, conversion and recycling) act consciously to reduce their negative impact on the environment and find effective solutions to prevent pellet spills in the industry to minimize environmental damage and reduce the costs associated with clean-up efforts.

Documents US2022/277546A1 [ZHAO KEFENG] and XP093075253 [GARCIA-GARIN ODEI et al. "Automatic detection and quantification of floating marine micro-litter in aerial images: Introducing a novel deep learning approach connected to a web application in R", ENVIRONMENTAL POLLUTION, vol. 273, 1 March 2021, page 116490, ISSN: 0269-7491, DOI: 10.1016/j.envpol.2021.116490] relate to computer-implemented methods for detecting the presence of particles and determining the number of particles in a source image, according to the preamble of the independent claims.

### DESCRIPTION OF THE INVENTION

In a first inventive aspect, the invention provides a *computer-implemented method* according to claim 1. This includes a method *for detecting the presence of particles having a diameter of about 5 mm or below and determining the number of particles in a source image, the source image being a digital image comprising a plurality of pixels, received from a detecting device provided with image acquiring means, the method comprising the steps of:*
*detecting the presence of a fluid in the source image by feeding the source* image to a first artificial intelligence algorithm trained with a first training data set comprising relevant digital images labelled according to the presence, or lack of presence, of a fluid, and
when the presence of fluid is detected,
   *determining the type of fluid using a second artificial intelligence algorithm trained with a second training data set comprising relevant digital images labelled according to the type of fluid which is present therein,*
   *selecting, according to the type of fluid, a third artificial intelligence algorithm among a plurality of artificial intelligence algorithms configured to detect the presence of particles on a fluid surface,*
   *detecting the presence of particles in the source image, by feeding the source image to the third artificial intelligence algorithm trained with a third training data set comprising relevant digital images labelled according to the presence, or lack of presence, of particles on a fluid surface, and*
*when the presence of particles is detected,*
*determining the number of particles in the source image by feeding the source image to a fourth artificial intelligence algorithm trained with a fourth training data set comprising relevant digital images labelled according to the number of particles present on a fluid surface, the particles in the source image being depicted within particle edges, and wherein the step of determining the number of particles further comprises the steps of:*
   *identifying the particle edges,*
   *computing the area of the particles according to the number of pixels depicted within the particle edges, and*
   *obtaining a number of particles by dividing the area of the particles depicted on the source image by an average area of a particle in pixels.*

By particle should be understood as a fragment of solid material, in particular small fragments of plastic, such as plastic pellets, nurdles, beads, microbeads or microplastics of any composition or shape; in some embodiments, particles also include non-polymeric debris, such as sand, soil, plant litter and rubble. The particles may, in cases, break down to form particle dust; dust should be understood as diminutive fragments of a particle, of plastic or non-plastic origin (such as a small particle of sand, mud, soil, plant litter and/or rubble), having a size of about 0,1 mm or lower, such that it is not possible to distinguish one from another with the naked eye. The particles may be scattered on a surface, floating on the surface of a fluid, or cluster in large patches, in particular accumulations of dust.

The fluid should be understood as any type of fluid substance or mixture of substances, without limitation in density, composition or viscosity; a likely example of fluid is water, which may be further characterized in terms of its origin or composition, such as for example, wastewater, process water or rainwater. For example, the fluid may be waste water containing small amounts of other substances, such as synthetic oils, fuel, dirt and/or other chemical products capable of altering the properties of the fluid. The present invention could also be used with other types of fluids, such as, industrial fluids and hydrocarbon fluids. By surface, or free, surface, should be understood any exposed area of a solid or fluid, or mixture thereof, in particular, a surface capable of holding particles, for example by buoyancy.

By source image should be understood a digital image, comprising a plurality of pixels, preferably arranged according to a pattern or array, obtained by image acquiring means; an image should be also considered a source image even if it has undergone a processing, for example, filtering, rotation, masking, decimation or the like, providing that the target information of the raw image can be retrieved. Examples of digital images used in the context of the present invention are RGB digital images (comprising red, green and blue channels); CMYK digital images (comprising cyan, magenta yellow and key (black) channels); HSV digital images (comprising hue, saturation, and value coordinates); HSL digital images (comprising hue, saturation and lightness coordinates), infrared digital images and grey-scale digital images. Preferably, the image acquiring means are arranged and directed to an area of interest, such as, for example, the surface of a wastewater drain of a production facility showing risk of particle spill.

Further to the pixels making up the source image, in some embodiments the digital image comprises additional data, or associated data, such as data of the geolocation of the image, identification of the image or other information associated to the image; in other embodiments, the associated data comprises image metadata.

In an embodiment, at least one of the artificial intelligence algorithms disclosed herein is hosted in one or more detecting systems, which may be part of a server of the computing system or may be separate units in data communication with the computing system, for example, one or more processing units configured to store and run an artificial intelligence algorithm, feed it with input data, such as source images and retrieve inferred data.

By artificial intelligence algorithm should be understood a computer implementation of an artificial intelligence algorithm trained with a training data set, wherein the training data set comprises relevant digital images labelled according to the intended purpose of the artificial intelligence algorithm. The artificial intelligence algorithms used in any aspect of the present invention may be of any type, and preferably use artificial neural networks, such as a convolutional neural network trained to perform semantic segmentation, a convolutional neural network trained to identify objects or a classification neural network.

The artificial intelligence algorithms used in the invention are advantageously obtained from a training process; the training process requires feeding a training dataset comprising a plurality of source images to the artificial intelligence algorithm and obtaining the set of weights or parameters which define the algorithm and fit its intended purpose. To that end, the source images could be processed to optimize the process by means of changing, if needed, the aspect ratio of the source images, cropping, or otherwise changing the centre of the image to show only parts of the image with a substantial amount of particles, changing the number of pixels, or size, of the source image to a more fitting format, and adding tags to the elements of the image recognized as particles.

Detecting the number of particles should be understood as a computer vision-based process for obtaining a number of individual particles depicted in the image, wherein the number may be an estimation or the exact number.

Advantageously, the method allows a complete and comprehensive monitoring in real time of an industrial plant, logistics centre or transit area to detect the presence of pellets on a surface. Moreover, through the use of computer vision technology, the system allows unlimited scalability at a reduced cost, which makes it especially suitable for the control of large areas where the scalability costs of digitization solutions can make their implementation unfeasible. Likewise, it allows continuous real time feedback to the computing system, improving the reliability of the inspection and reducing false positives continuously and indefinitely.

Moreover, the fact of selecting the third artificial intelligence algorithm, among a plurality of possible particle detection candidate algorithms, depending on the particular type of fluid which has been detected in a previous step, makes possible for the particle detection method of the present invention to have an increased reliability and performance, as compared to those belonging to the prior art, since it is able to reduce the number of false positives.

In the computer implemented methods according to the present invention, particles are depicted in the image as a group of loose individual elements enclosed by an edge, which can be recognized by the fourth artificial intelligence algorithm; once the edges of the particles are recognized, the fourth artificial intelligence algorithm computes the number of pixels enclosed by the particle edges, which amounts to the area of the image occupied by particles. Then, the ratio of the pixels within particle edges to the average area of a particle, also in pixels, yields the number of particles in the image.

In a particular embodiment, *the digital source image further comprises associated data, and wherein the method further comprises the step of: adding the determined number of particles to the associated data.*

According to this embodiment, the number of particles determined by the fourth artificial intelligence algorithm is added to the associated data, such that this information item is stored with the image for later processing, or outputted, or stored permanently in a data storage unit.

The source images may be stored in a data storage unit of the computing system prior to the execution of the method, or may be received on a regular basis from a device with image acquiring means, for example, a RGB or infrared digital camera in data communication with the computing system; in other embodiments, the computing system receives the images from a user device with a digital camera and connection to a data network.

In a particular embodiment, *the method further comprises the step of: processing the source image, wherein the processing of the source image comprises applying an overlay on the source image, obtaining a processed image.*

Advantageously, the overlay highlights an area of interest of the image, such as a high concentration of particles, a recurrent or conflictive area, or a specially protected place.

In a particular embodiment, *the method further comprises the steps of:*
*detecting the presence of particle dust in the source image by feeding the source image to a fifth artificial intelligence algorithm trained with a fifth training data set comprising relevant digital images labelled according to the presence or lack of presence of dust on a fluid surface, and*
   *when the presence of dust is detected,*
*determining the quantity of particle dust by feeding the source image to a sixth artificial intelligence algorithm trained with a sixth training data set comprising relevant digital images labelled according to the quantity of particle dust present on a fluid surface.*

Particle dust has different properties than particles and they may be indistinguishable in an image from a homogeneous surface, so the fourth artificial intelligence algorithm configured to determine the number of particles may not be able to recognise particle dust. For that reason, it is advantageous to use a separate, specific artificial intelligence algorithm capable of detecting the presence of dust. The determined quantity, in volume, mass or surface, is added to the associated data of the image for further processing, in the same manner as the number of particles.

In a particular embodiment, *the particle dust is depicted in the source image within dust edges, and wherein the step of determining the quantity of particle dust comprises:*
*identifying the dust edges,*
*computing the ratio of pixels depicted within the dust edges in respect of the total number of pixels of the source image, and*
   *when the ratio of dust exceeds a threshold,*
*confirming that the particle dust detection is not a false positive.*

The particle dust usually aggregates in lumps or clusters, each of which being enclosed by an edge, which in turn can be recognized by the computing system; once the edges of the areas filled with dust are recognized, the computing system computes the number of pixels enclosed by the dust edges, which amounts to the area of the image occupied by dust; then, a ratio of number of pixels to total number of pixels of the image is calculated. This value is compared with a pre-established threshold value. If the computed ratio is higher than the threshold, the computing system confirms that it is not a false positive.

In a particular embodiment, at least one algorithm chosen between the first artificial intelligence algorithm, second artificial intelligence algorithm, third artificial intelligence algorithm, fourth artificial intelligence algorithm, fifth artificial intelligence algorithm and sixth artificial intelligence algorithm uses an artificial neural network, a convolutional neural network trained to perform semantic segmentation, a convolutional neural network trained to identify objects or a classification neural network.

More preferably, at least one algorithm chosen between the first artificial intelligence algorithm and the second artificial intelligence algorithm uses a classification neural network and/or at least one algorithm chosen between the third artificial intelligence algorithm and the fourth artificial intelligence algorithm uses a convolutional neural network trained to perform semantic segmentation or a convolutional neural network trained to identify objects.

In a particular embodiment, *the digital source image further comprises associated data, and wherein the method further comprises the step of:*
*adding the determined quantity of particle dust to the associated data.*

Advantageously, this allows for the quantification of the amount of dust in an image, such that it can be computed together with the amount particles as part of a potential spill.

In a particular embodiment, *the method further comprises the step of:*
*determining a set of geographical coordinates of the source image from the associated data.*

A set of geographical coordinates or other analogous geolocation data may be provided with the source image, and reflecting the location of the place where the source images have been obtained. This may advantageously help to determine the source of the spill, or to elaborate geographical analyses.

In a particular embodiment, *the method further comprises the step of:*
*generating a pixel mask.*

A pixel mask may be applied to the images in order to identify elements in the image, and ease the detection of particles or particle dust.

In a particular embodiment, *the method further comprises the step of:*
*sending the processed image and the associated data to a server of the computing system, wherein the associated data of the processed image comprises the associated data of the source image and the added data.*

It is advantageous that the computing system comprises, or is in data communication with, a server with means to process, store and analyse the images and the associated data, as well as the data added during the execution of the method, for example the number of particles and/or the amount of particle dust. This allows the transfer of relevant data to a user or external client, without the need to provide full access to the system.

In a particular embodiment, *the fluid is at least one of: process water, rainfall water, waste water.*

Commonly, production facilities making use of pellets are extensive and include drainage and sewer systems for the production waste water, or process water, and for general waste water, which may or may not be connected; further, the extension of the facilities generally means that a rainwater collection system needs to be provided. It is known that particles, in particular pellets, are prone to be washed out of the facilities through drainage systems, and therefore it is advantageous to place detecting devices on or near these systems, and accordingly, it is useful that the artificial intelligence algorithms are able to distinguish the most likely fluids or types of water on which the particles will be found.

In a particular embodiment, *the particles are one or more of: plastic pellets, concentration of plastic pellets, microplastics,* sand, mud, soil, plant litter, particles of industrial origin and rubble.

Preferred examples of particles are plastic or polymeric pellets, but in some cases clusters of pellets, dirt or undifferentiated secondary microplastics can also be considered as particles in the sense of the invention.

In a second inventive aspect, *the invention provides a computing system for detecting the presence of particles on a surface by executing a method according to the first inventive aspect, wherein the system comprises:*
*at least a detecting device with image acquiring means, configured to obtain images of a surface,*
*at least a server, configured to combine images of a surface, and*
*communication means configured to enable a data communication with a data network.*

The detecting device may be advantageously placed on or near a region of interest, such as an area where particle spills are expected. This detecting device may have various configurations, and be adapted to the environment and conditions of the surveyed area. For example, in an embodiment, the detecting device may be a floating or waterborne device intended for being placed on a drainage channel, above the free surface of the water, with the image acquiring means pointing towards the free surface of the fluid; in this fashion, the detecting device can advantageously detect the presence of particles, in special, pellets, on a drainage conduct leading to a sewer or to a bigger body of water, and thus minimize the damage of a spillage. Furthermore, the system allows for the modularization and standardization of the equipment in order to reduce production and maintenance costs.

In a third, non-claimed, inventive aspect, *the invention provides a detecting device for detecting the presence of particles on a fluid surface pertaining to a computing system according to second inventive aspect, the device comprising image acquiring means and data processing means.*

Further to the image acquiring means, the detecting device advantageously comprises data processing means, such that the detecting device is capable of executing part or whole of the method of the first inventive aspect.

In another, also non-claimed, inventive aspect, the invention provides a computer implemented method for obtaining an artificial intelligence model configured to detect the presence of particles on a surface and be applied in a method according to any of the inventive aspects, wherein the artificial intelligence model is obtained by training an artificial intelligence algorithm with a training dataset comprising images of particles on a surface, wherein the training comprises the steps of:
modifying the source image to obtain a square aspect ratio,
centring the source image on the pixels depicting particles,
modifying the size of the source image,
tagging the particles in the image by means of the artificial intelligence algorithm,
feeding the image to a training dataset of the artificial intelligence algorithm.

The artificial intelligence models used in the invention are advantageously obtained from a training process of an artificial intelligence algorithm; the training process requires, in an example, feeding a training dataset comprising a plurality of source images to the artificial intelligence algorithm and obtaining the set of weights or parameters which define the model and fit its intended purpose. To that end, the source images are processed to optimize the process by means of changing, if needed, the aspect ratio of the source images, cropping, or otherwise changing the centre of the image to show only parts of the image with a substantial amount of particles, changing the number of pixels, or size, of the source image to a more fitting format, and adding tags to the elements of the image recognized as particles; this last step is advantageously performed by means of an artificial intelligence model, to expedite and improve the process.

In a further inventive aspect, which is also not claimed, the invention provides a computer-implemented method for detecting the presence of particles and determining the number of particles in a source image, the source image being a digital image, the method comprising the steps of:
determining geographical coordinates from the associated data of the source image, and,
selecting, according to the geographical coordinates, one of a plurality of artificial intelligence models configured to detect the presence of particles on a surface,
processing a source image, wherein the processing of the source image comprises dividing the source image into two or more sub-images,
detecting the presence of particles in the two or more sub-images by feeding the two or more sub-images to the selected artificial intelligence model configured to detect the presence of particles on a surface, and
when the presence of particles is detected,
determining the number of particles in the two or more sub-images by feeding the two or more sub-images to an artificial intelligence model configured to determine the number of particles on a surface.

The detection of particles is conditioned by the artificial intelligence model used and the training dataset used to obtain it; generally, the closer the features of the training dataset to those processed in the inference, the more accurate the results; it is known that certain types of particles are more likely to be found than others on specific locations, such as certain production facilities and accordingly, a higher level of accuracy and lower computing load may be achieved by obtaining a plurality of artificial intelligence models, by training them with datasets highlighting features corresponding to a specific type of particle.

Therefore, the geographical coordinates or geolocation data of the source image, i.e., the geolocation data of the image acquiring means at the instant of taking the image, are used to determine, in a first place, the location of the depicted event, such as a particle spill, and secondly, to include the location data in a global analysis and use the geolocated images in a geographical information system (GIS).

The location of the depicted event is used to correlate a specific source of particles with a probable type of particle, and accordingly the detection of the particles may be improved by selecting an artificial intelligence model trained with features closer to those of that probable type of particle; for example, a first facility at a first location may originate mainly white coloured and roughly spherical particles, while a second facility at a second location originates elongated particles with blue hues, hence the detection of particles might be improved by considering these features. Preferably, the model may be selected from a set of models, each one trained to identify and detect a type of particle related to a specific location or production facility. The geographical coordinates or geolocation data is therefore used to fine tune the detection of particles according to the most usual features of the particles of a certain location.

Raw source images obtained from image acquiring means not optimized for computer vision, like, for example, conventional phone cameras, may require additional computing resources than optimized source images; in particular, source images files from conventional digital cameras may be too big for an acceptable processing, and therefore their size must be reduced. While it would be possible to decimate the source image, relevant details might be lost in the process, and thus it is preferred to divide the source images in sub-images.

By sub-image, or sub image of a digital source image, should be understood as each of the n resulting images of dividing the source image into n parts; for example, if a source image is divided into four parts, then it results in four sub-images. The method allows for the independent detection of particles on each sub-image, which may be implemented in parallel or series, according to the suitability of the computing structure.

This method may be advantageously applied to computing systems comprising portable user devices like, for example, mobile phones with cameras; in those examples, a user carrying such user device is able to take one or more photographs of a region of interest, when the user spots a possible particle spill.

In a particular embodiment, the step of processing the source image further comprises the step of modifying the source image to obtain a processed image with a square aspect ratio. Images with a square aspect ratio are known to have a better behaviour in image recognition models; therefore, this modification of the source image allows for a more efficient processing.

In a particular embodiment, the step of processing the source image further comprises the step of modifying the size of the source image. With this transformation of the source image, the definition of the image is reduced to decrease the computing load of the computing system, and centred on the relevant parts of the image, i.e., those showing particles.

In a particular embodiment, the particles are depicted in a sub-image within particle edges, and wherein the step of determining the number of particles further comprises the steps of:
identifying the particle edges,
computing the area of the particles according to the number of pixels depicted within the particle edges, and
obtaining a number of particles by dividing the area of the particles depicted on the sub-image by an average area of a particle in pixels.

This process is substantially analogous to the process of determining the number of particles in an undivided source image.

In a particular embodiment, the method further comprises the step of post-processing the one or more sub-images into a post-processed image comprising associated data, wherein the associated data of the post-processed image comprises the associated data of the source image and the added data; in particular, in an embodiment, the post-processing of the one or more sub-images comprises the step of combining the sub-images according to the source image.

By post processing should be understood any transformation, modification or processing of a source image or a sub-image after being fed to an artificial intelligence model. By combination of the sub-images should be understood the process or rejoining or stitching a set of sub-images according to the arrangement or pattern of the source image originating the set of sub-images, similarly to a mosaic; as a result, the combination of the sub-images form a post processed image substantially depicting the same scene as the source image.

In a further, non-claimed, inventive aspect, the invention provides a computer-implemented method for detecting the presence of particles in a source image, the source image being a digital image, the method comprising the steps of:
feeding camera shots captured by a camera of the computing system to an artificial intelligence model configured to detect large objects in shots,
when an object substantially bigger than the size of a particle is detected, the method further comprises the step of:
   determining the type of object by feeding the camera shots to an artificial intelligence model configured to determine the type of object in shots,
   causing the camera to follow the object,
   obtaining a source image,
   detecting the presence of particles in the source image by feeding the source image to an artificial intelligence model configured to detect the presence of particles on a surface, and
   when the presence of particles is detected,
   determining the number of particles in the source image by feeding the source image to an artificial intelligence model configured to determine the number of particles on a surface.

By camera should be understood any kind of image acquiring means capable of obtaining digital images of a region of interest, or shots, on a regular basis; preferred examples of cameras are any type of surveillance equipment, including but not restricted to RGB cameras, infrared cameras, and the like. In an embodiment, the camera is an image acquiring means of the computing system, and the camera shots are source images. By object substantially bigger than the size of a particle should be understood an object significantly bigger, usually by one or two orders of magnitude, than most of the particles described in this document; it should be construed as an extraneous object that is not commonly found in the region of interest. Preferred examples of objects are vehicles and/or humans accessing a restricted area. By following an object should be understood the process of changing the focus of the shot so that the identified object remains identifiable; in certain embodiments, the camera comprises directing means configured to change the direction of the camera and keep the object within the frame.

The method is especially suited to detect the presence of individuals, on foot or in a vehicle, wherein the individuals may be involved in the spillage of pellets or other particles, and it further allows the detection of such spills of particles at the same moment it happens.

In another embodiment, when the object is a vehicle, the method further comprises the step of detecting an identification number of the vehicle. Not only the method allows the detection of a particle spill from a vehicle, it is possible to gather identification data of the vehicle.

In another embodiment, when the object is a human, the method further comprises the step of pixelating the face of the human on the shot. This is because severe privacy rules apply on a number of jurisdictions to protect the anonymity of private citizens.

In another embodiment, the method further comprises the step of selecting a sweeping trajectory of the camera, in this embodiment, the camera preferably comprises directing means configured to change the direction of the camera and keep the object within the frame; in some embodiments, the camera is constantly sweeping a wide area according to a pre-established pattern, such that the computing system can detect the presence of particles at all times. With this step, the camera is rotated, or otherwise pointed to cover a different area of a region of interest according to one of a plurality of pre-established sweeping patterns or trajectories to the focus of the camera; the sweeping pattern is selected by the computing system according to an instruction of a user, a pre-scheduled order, or the like.

### DESCRIPTION OF THE DRAWINGS

The foregoing and other advantages and features will be more fully understood from the following detailed description of exemplary embodiments with reference to the accompanying drawings, which should be considered by way of illustration and not limitation, in which:
- Figures 1a-1f: These figures show flowcharts of several examples of the methods of the invention.
- Figure 2: This figure represents an example of the computing system pointing to a drainage conduct.
- Figures 3a-3b: These figures show examples of the detecting device and the computing system.
- Figures 4a-4c: These figures show flowcharts of examples of the methods of the invention and an example of the computing system.
- Figures 5a-5c: These figures show flowcharts of examples of the methods of the invention and an example of the computing system.

### PREFERRED EMBODIMENT OF THE INVENTION

Throughout the present document it will be understood that various parts of one embodiment of the invention can be freely combined with parts described in other embodiments, even being said combination not explicitly described, while the scope of the invention is defined by the appended claims.

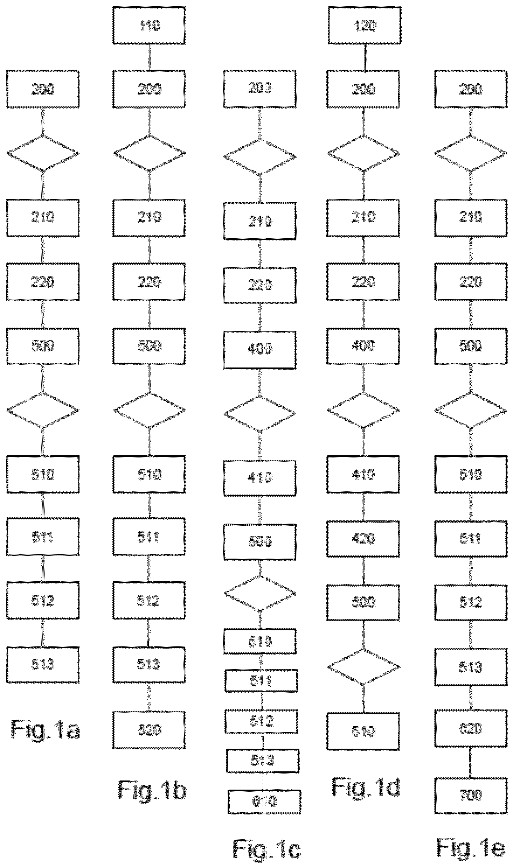

Figures 1a through 1f are flowcharts showing several possible examples of the methods of the invention. In a preferred example, the method is implemented as part of a software running on a computing system (10) which will be described below.

Figure 1a shows an example of the method for detecting particles; this example, like the other examples unless it is described otherwise, is intended to detect polymeric pellets produced in a petrochemical plant, in particular pellets spilled on a drainage conduct of the petrochemical plant; the method may nevertheless detect other particles, such as plant litter and other debris, for example sand, mud, soil, rubble, particles of industrial origin and combinations thereof. The drainage conduct may be in connection with a larger sewer system, and is capable of collecting any of process water, waste water or rain water. Therefore, upon start of the process, the computing system (10) feeds a set of source images to a first artificial intelligence algorithm, based on a classification neural network and which detects (200) the presence of fluid, in particular water, in the images. Therefore, the first and second artificial intelligence algorithms are different from each other.

In the method of the invention shown in Figure 1a, the source image undergoes processing.

More particularly, the source image is cropped and scaled so that the dimensions are compatible with the size (width and height) of the digital images, which make up the first training data set of the first artificial intelligence algorithm. The source image is converted to RGB digital image format, if necessary. Pixel values (typically ranging from 0 to 255 to 0 to 1) of the cropped source image are normalized to facilitate computation and provide a common scale for model metrics. This source image processing could be applied in the context of other artificial intelligence algorithms used in any aspect of the present invention.

The first artificial intelligence algorithm compares the processed source image with digital images of the first training data set and expresses the result of this comparison in the form of similarity percentage to each of the classes considered for image classification (i.e., presence or lack of presence of fluid and type of fluid). This comparison process could be applied in the context of other artificial intelligence algorithms used in any aspect of the present invention.

In example shown in Figure 1a, the training process carried out to obtain the first training data set of the first artificial intelligence algorithm was as follows: a set of digital images was constituted with their regions of interest, the output expected by the neural network was labelled (the class that represents that image in the highest percentage). The dataset was divided into subsets intended for training, validation and testing of the weights that the algorithm generates with training. A training script was executed indicating the following hyperparameters:
- batch: data blocks analysed simultaneously;
- epochs: the number of times the inference is performed on the dataset grouped in batches
- optimizers and learning rate: variable depending on the dimensions and characteristics of the dataset (well-differentiable classes, dataset with diversity of cases, etc.).

The architecture code on which the training is performed, was also introduced, typically in Tensorflow or Pytorch as well as the training speed depending on the characteristics of the hardware that performs.

Once again, this training process could be carried out to obtain the training data set corresponding to other artificial intelligence algorithms used in any aspect of the present invention.

If the first artificial intelligence algorithm detects (200) water in the image, it is determined (210) which type of water it is; if no water or other fluid is detected, the computing system (10) remains in standby. In this example, the step of determining (210) the type of fluid is carried out at the same time and with the same means (i.e, the first artificial intelligence algorithm) as the step of detecting (200) the presence of water. Then, according to the type of water determined, the computing system (10) selects a third artificial intelligence algorithm among of a plurality of artificial intelligence algorithms, in particular the algorithm whose training dataset best matches the type of water.

Once a third suitable artificial intelligence algorithm has been selected, the computing system (10) feeds the source images to the third artificial intelligence algorithm in order to detect (500) the presence of pellets in the image. If pellets are detected in the image, the computing system (10) feeds the source images to a fourth artificial intelligence algorithm configured to determine (510), or count, the number of particles on the surface of water. This data, namely the type of water on the conduct, the presence of pellets on the surface and the number of pellets may be either stored in the computing system (10), transmitted to another device or outputted to report a user.

In this case, both the third artificial intelligence algorithm and the fourth artificial intelligence algorithm use respective convolutional neural networks trained to identify objects or to perform a semantic segmentation.

Nevertheless, the third and fourth artificial intelligence algorithms, compare the processed source image with the digital images which make up the third and fourth training data sets in a different way, as compared to the first artificial intelligence algorithm.

Thus, in the case in which a convolutional neural network trained to identify objects is used, instead of expressing the result of this comparison in the form of a similarity percentage to each of the classes considered, this convolutional neural network used by the third artificial intelligence algorithm and/or fourth artificial intelligence algorithm locate the region of the processed source image where the searched object is located. Moreover, the dataset is done differently:
- For each image, of the third and fourth training data sets the location in pixels of the searched objects must be noted. For an element of the dataset there may be multiple results according to the detected objects.
- In this way, the inputs will always be an image and the outputs will be a list with the objects detected in the image.

In the case that a convolutional neural network trained to perform semantic segmentation is used, the input is a digital image and the output is a black and white mask, where black represents the background of said image and white represents the pixels that correspond to the labelled class. To create the dataset, trace points in the image should be included, outlining the objects that correspond to a class which is interesting to label as a dataset. This can be done using specialized software that allows to store the labelled points by marking them in the original image. Subsequently, for each of the images that make up the training dataset, a file is generated including the list of points, assigned class and corresponding image. Masks could be created using a Python script from the original digital image and the list of points corresponding to each labelled object. This mask, together with the original image, constitutes the data source of the dataset.

Both comparison process mentioned above could be carried out by any other artificial intelligence algorithms used in any aspect of the present invention.

Finally, in Figure 1a it is shown how the stage of determining (510) the number of particles further also comprises the steps of:
identifying (511) the particle edges,
computing (512) the area of the particles according to the number of pixels depicted within the particle edges, and
   obtaining (513) a number of particles by dividing the area of the particles depicted on the source image by an average area of a particle in pixels.

Figure 1b shows a variant of this example, wherein the source images are received (110) from a detecting device (2) rather than, for example, retrieved by the computing system (10) from a database; moreover, it further comprises the step of adding (520), by the computing system (10), the number of particles to the source images' associated data. This associated data is, in the example, a data field of the digital image field, intended to be stored, retrieved or transmitted together with the image for record or analysis.

Figure 1c shows another variant of the example, comprising further steps directed to the detection of particle dust, and the application of an overlay to the source images. In the variant, the computing system (10) feeds the source images to a fifth artificial intelligence algorithm configured to detect (400) dust in the image; if dust is detected, the computing system (10) feeds the source images to a sixth artificial intelligence algorithm capable of determining (410) the amount, or quantity of pellet dust. Once the number of pellets has been determined (510), the computing system (10) processes (610) the source images by applying an overlay to them; the overlay may be, for example, a coloured area of the image indicating the parts with a certain concentration of pellets, areas with dust, or areas free of particles.

Figure 1d shows yet another variant of the example, including the step of determining (120) the geographical coordinates of the source image capture location, and the addition (420) of the quantity of particle dust to the associated data of the source image. The geographical coordinates may be easily assessed for example through the metadata of the image, or when the location of the detecting device (2) is known, by identifying the geolocation of that detecting device (2).

Figure 1d shows a possible variant of the example, wherein it comprises steps for determining (510) the number of particles, the generation (620) of a pixel mask for the source image and the transmission of the output image by sending (700) it to a server of the computing system (10). The counting or determination (510) of the number of pellets is achieved, in this variant, by identifying (511) the pellet edges, then computing (512) the area, or number of pixels, enclosed by the edges, and obtaining (513) the number of particles by calculating the ratio of number of pixels within edges to the average area in number of pixels of a single pellet. The identification (511) of the edges is accomplished with a semantic segmentation algorithm, for example, an algorithm obtained from a U-Net network architecture.

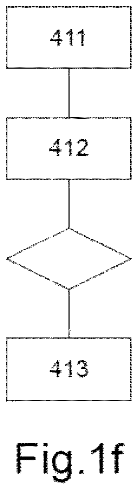

An analogous process can be applied to the step of determining (410) the amount of pellet dust, shown in Figure 1f. Similarly, the particle dust edges are identified (411) on a first step, then a ratio of number of pixels within edges to total number of pixels of the image is computed (412) and compared to a threshold value, which confirms (413) that the detection does not correspond to a false positive if the ratio exceeds the threshold.

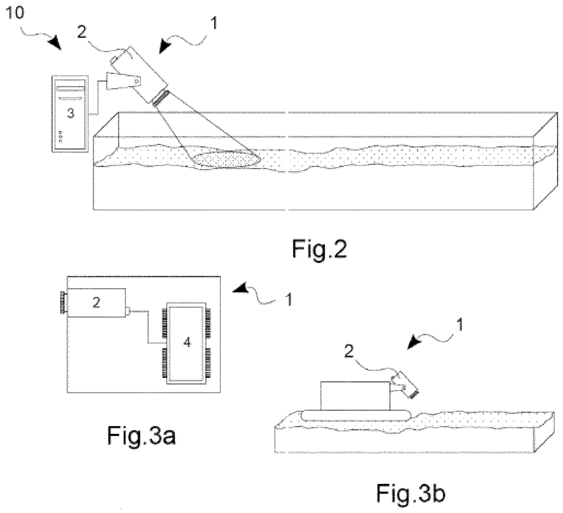

Figure 2 shows an example of the computing system (10) of the invention; the depicted example comprises a detecting device (1) and a server (3) computer in data communication with the detecting device (1). The server (3) is intended to execute, in this example, most or all of the steps of the method, while the detecting device (1) is mainly tasked with providing the source images. The detecting device (1) of the example comprises image acquiring means (2), such as a conventional RGB camera or an infrared camera, and is pointing to a drainage conduct with possible presence of pellets. The server (3) is also in data communication with a data network, which enables the computing system (10) to transmit and/or receive data to or from other networked computing devices.

Figures 3a and 3b show two possible implementations of the detecting device (1); in the example of Figure 3a, the image acquiring means (2) and the data processing means (4) of the detecting device (1) are enclosed in a compact housing and may be conveniently located on a fixed position near the region of interest; in turn, the example of Figure 3b is arranged on a floating fixture intended to be laid on the free surface of a fluid, such as the free surface of the water flowing on a drainage conduct; this arrangement has the advantage of keeping a fixed distance between the image acquiring means (2) and the surface of the fluid.

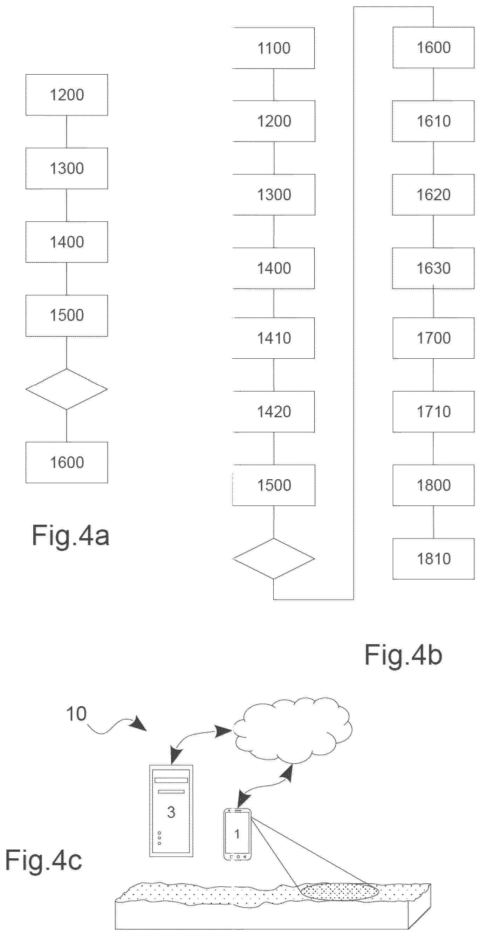

Another, non-claimed, example of the invention is illustrated in Figures 4a to 4c; this example of the method, as shown in Figure 4a, is particularly suited for a computing system (10) with a detecting device (1) implemented as a mobile device for the acquisition of images in data communication with a server (3).

The method of the example entails determining (1200) the geographical coordinates of the source image, namely the geolocation of the place where the image was taken; this information is found in the associated data of the source image, for example as part of the metadata, or added to the associated data of the image. This geolocation data makes possible the selection (1300) of a suitable third artificial intelligence algorithm for the detection of particles originating in that area. This is beneficial because some visible features of the pellets, e.g., its colour and shape, are dependent on the production facility, and therefore, using a third artificial intelligence algorithm optimized for a certain type of pellet yields more accurate detection and shorter computing times. In this example, the method is used by an industry with two production facilities, A and B, in respective locations, wherein the pellets produced in A are generally white in colour and round in shape, whereas the pellets produced in B generally show a variety of colours and have elongated shape. Hence, when the computing system (10) determines (1200) that the source images have been taken in or near A, it is selected (1300) a third artificial intelligence algorithm trained with a dataset mostly comprising pellets made in A.

The source images are then processed (1400) by dividing them into sub-images; in practice, since the source images are usually taken with a conventional smartphone with high-definition camera, they should be tessellated into a plurality of sub-images of smaller size, encompassing less pixels, so that they are faster and simpler to process than the raw image. Each of the sub-images is then fed to the previously selected third artificial intelligence algorithm to detect (1500) the presence of particles in the sub-image. If particles are detected (1500), it is then determined (1600) the number of particles by means of a fourth artificial intelligence algorithm configured to detect the number of particles.

Avariant of this example is illustrated on Figure 4b, where additional steps are executed. In this variant, the source image is received (1100) from a detecting device (1), upon implemented in the example by a smartphone with a suitable software application; in particular, the image is taken by a user holding the smartphone and transmitted in real time to a server (3) tasked with the execution of the method. Then, after the selection (1300) of the artificial intelligence model, the processing (1400) of the source image further comprises modifying (1410) the source image to obtain a processed image with a square aspect ratio and modifying (1420) the size of the source image to better fit the dimensions of the images used in the training dataset; these steps ensure a better behaviour of the processing of the images by the artificial intelligence models, without compromising the performance and accuracy of the process.

The step of determining (1600) the number of particles further comprises in this variant identifying (1610) the particle edges, computing (1620) the number of pixels, or area, depicted within the particle edges, and obtaining (1630) the number of particles in the sub-image dividing the area occupied by the particles depicted on the sub-image by a pre-calculated average area of a particle in pixels. Next, the sub-images are post-processed (1700) by combining (1710) the sub-images according to the source image, thus effectively reversing the process of dividing the source image. Finally, the determined number of particles is added (1800) to the associated data of the image and sent (1810) to a server of the computing system (10).

The method of the example is preferably executed in a computing system (10) as shown in the Figure 4c; as disclosed above, the computing system (10) comprises a server (3) for executing the method and a smartphone working as a detecting device (1) with geolocation means, such as a GPS, Galileo, GLONASS or BeiDou module, and comprising a software application configured to establish and manage a data communication with the server (3) including the transmission of images and geolocation data.

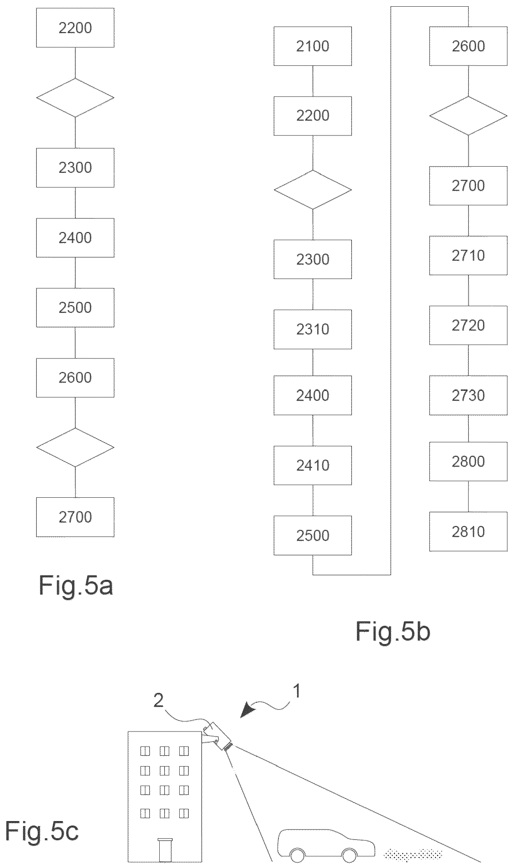

In yet another, non-claimed, example of the invention, shown in Figures 5a to 5c, the method, is particularly suited for a computing system (10) with a detecting device (1) implemented as a camera attached to a structure for the acquisition of images in data communication with a server (3).

Figure 5a shows the flowchart corresponding to the method of the example. Said example requires feeding (2200) camera shots of the camera pointing to a region of interest to an artificial intelligence model configured to detect large objects; in particular, the objects are meant to be substantially large entities in comparison with the particles, passing through the area of interest; of particular significance are entities which can be related to a pellet spill, such as people or vehicles, since these two entities are known to be commonly involved in those events. Should an unusual object or entity be detected in the region of interest, the camera shots are fed to an artificial intelligence model configured to determine (2300) the type of object in shots, after which the computing system (10) will cause (2400) the camera to follow the object, for example by actuating rotary and/or linear actuators to keep the object of interest within the field of view of the camera. Next, a source image is obtained (2500) with the camera or a separate image acquiring means; the source image is then fed to an artificial intelligence model configured to detect (2600) the presence of particles; finally, if particles are indeed detected, the number of particles is determined (2700) with an artificial intelligence model configured to determine the number of particles.

Figure 5b shows a variant of this example, further comprising the step of receiving (2100) the source image from a detecting device (1) with image acquiring means. The variant also involves the step of detecting (2310) a vehicle licence number or another identification of the vehicle, if this type of entity is detected; if a person is detected instead, the face of the individual is pixelated (2320) to preserve their privacy and comply with data protection regulations. Also, the sweeping trajectory of the camera to follow the object can be selected (2410), for example according to the type or number of detected entities. In the variant, and consistently with other examples of the invention, determining (2700) the number of particles entails identifying (2710) the particle edges, computing (2720) the area of the particles according to the number of pixels depicted within the particle edges, and obtaining (2730) a number of particles by dividing the area of the particles depicted on the source image by an average area of a particle in pixels. Finally, the determined number of particles is added (2800) to the associated data of the image and sent (2810) to a server of the computing system (10).

In a variant, the camera constantly monitors a wide region of interest by sweeping according to a pre-established trajectory, such that the computing system (10) receives (2100) periodically source images from each part of the region of interest, and is capable of detecting (2600) the presence of particles in the image.

A possible arrangement of a detecting device (1) according to this example can be seen in the Figure 5c; this figure shows the detecting device (1) comprising image acquiring means (2), implemented as a surveillance camera attached to a building and pointing to a region of interest where a vehicle and a spillage of pellets can be observed. The detecting device (1) comprises data communication means to relay the images to a server (3) of the computing system (10), not depicted in the figure. In other examples the installation of the detecting device (1) may be further improved with the use of motion sensors, configured to detect movement in a region of interest, and trigger the execution of the method.

## Claims

1. A computer-implemented method for detecting the presence of particles having a diameter of about 5 mm or below and determining the number of particles in a source image, the source image being a digital image comprising a plurality of pixels and being received from a detecting device provided with image acquiring means, the method comprising the steps of:
detecting (200) the presence of a fluid in the source image by feeding the source image to a first artificial intelligence algorithm trained with a first training data set comprising relevant digital images labelled according to the presence, or lack of presence, of a fluid configured to detect the presence of a fluid in an image, and
when the presence of fluid is detected,
determining (210) the type of fluid using a second artificial intelligence algorithm trained with a second training data set comprising relevant digital images labelled according to the type of fluid which is present therein,
selecting (220), according to the type of fluid, a third artificial intelligence algorithm among a plurality of artificial intelligence algorithms configured to detect the presence of particles on a fluid surface,
detecting (500) the presence of particles in the source images the particles being depicted in the source image as a group of loose individual elements enclosed by a particle contour, by feeding the source image to the third artificial intelligence algorithm trained with a third training data set comprising relevant digital images labelled according to the presence, or lack of presence, of particles on a fluid surface, so that the third artificial intelligence algorithm identifies the presence of particles by recognizing said particle contours in the source image and
when the presence of particles is detected,
determining (510) the number of particles in the source image by feeding the source image to a fourth artificial intelligence algorithm trained with a fourth training data set comprising relevant digital images labelled according to the number of particles present on a fluid surface, the particles in the source image being depicted within the particle contours, and wherein the step of determining (510) the number of particles further comprises the steps of:
identifying (511) the particle contours, *by means of a semantic segmentation algorithm performed by the third and*/*or the fourth artificial intelligence algorithm,*
computing (512) the area of the particles according to the number of pixels depicted within the particle contours, and
obtaining (513) a number of particles by dividing the area of the particles depicted on the source image by an average area of a particle in pixels.

2. Method according to the previous claim, wherein the digital source image further comprises associated data, and wherein the method further comprises the step of:
adding (520) the determined number of particles to the associated data.

3. Method according to any of previous claims, wherein the method further comprises the step of:
processing (610) the source image, wherein the processing of the source image comprises applying an overlay on the source image, obtaining a processed image.

4. Method according to any of previous claims, wherein the method further comprises the steps of:
detecting (400) the presence of particle dust in the source image by feeding the source image to a fifth artificial intelligence algorithm trained with a fifth training data set comprising relevant digital images labelled according to the presence, or lack of presence, of dust on a fluid surface, and
when the presence of dust is detected,
determining (410) the quantity of particle dust by feeding the source image to a sixth artificial intelligence algorithm trained with a sixth training data set comprising relevant digital images labelled according to the quantity of particle dust present on a fluid surface.

5. Method according to the previous claim, wherein the particle dust is depicted in the source image within dust contours, and wherein the step of determining (410) the quantity of particle dust comprises:
identifying (411) the dust contours,
computing (412) the ratio of pixels depicted within the dust contours in respect of the total number of pixels of the source image, and
when the ratio of dust exceeds a threshold,
confirming (413) that the particle dust detection is not a false positive.

6. Method according to any of claims 4-5, wherein at least one algorithm chosen between the first artificial intelligence algorithm, second artificial intelligence algorithm, third artificial intelligence algorithm, fourth artificial intelligence algorithm, fifth artificial intelligence algorithm and sixth artificial intelligence algorithm uses an artificial neural network, a convolutional neural network trained to perform semantic segmentation, a convolutional neural network trained to identify objects or a classification neural network, for identifying (511) the particle contours.

7. Method according to any of claims 4-5, wherein at least one algorithm chosen between the first artificial intelligence algorithm and the second artificial intelligence algorithm uses a classification neural network and/or at least one algorithm chosen between the third artificial intelligence algorithm and the fourth artificial intelligence algorithm uses a convolutional neural network trained to perform semantic segmentation or a convolutional neural network trained to identify objects, for identifying (511) the particle contours.

8. Method according to any of claims 4-5, wherein the digital source image further comprises associated data, and wherein the method further comprises the step of:
adding (420) the determined quantity of particle dust to the associated data.

9. Method according to any of previous claims, wherein the method further comprises the step of:
determining (120) a set of geographical coordinates of the source image from the associated data.

10. Method according to any of previous claims, wherein the method further comprises the step of:
generating (620) a pixel mask.

11. Method according to any of previous claims, wherein the method further comprises the step of:
sending (700) the processed image and the associated data to a server of the computing system (10), wherein the associated data of the processed image comprises the associated data of the source image and the added data.

12. Method according to the previous claim, wherein the fluid is at least one of: process water, rainfall water, waste water.

13. Method according to any of the previous claims, wherein the particles are one or more of: plastic pellets, concentration of plastic pellets, microplastics, sand, mud, soil, plant litter particles of industrial origin and rubble.

14. A computing system (10) for detecting the presence of particles on a surface by executing a method according to any of claims 1-13, wherein the system comprises:
at least a detecting device (1) with image acquiring means (2), configured to obtain images of a surface,
at least a server (3), configured to combine images of a surface, and
communication means configured to enable a data communication with a data network.

## Patentansprüche

1. Computerimplementiertes Verfahren zum Erkennen der Anwesenheit von Partikeln mit einem Durchmesser von etwa 5 mm oder weniger und zum Bestimmen der Anzahl der Partikel in einem Quellbild, wobei das Quellbild ein digitales Bild ist, das eine Vielzahl von Pixeln umfasst und von einer mit Bilderfassungsmitteln versehenen Erkennungsvorrichtung empfangen wird, wobei das Verfahren die folgenden Schritte umfasst:
Erkennen (200) der Anwesenheit eines Fluids im Quellbild, indem das Quellbild einem ersten Algorithmus der künstlichen Intelligenz zugeführt wird, der mit einem ersten Trainingsdatensatz trainiert ist, der relevante digitale Bilder umfasst, die gemäß der Anwesenheit oder Nichtanwesenheit eines Fluids markiert sind, und der dazu konfiguriert ist, die Anwesenheit eines Fluids in einem Bild zu erkennen, und
wenn die Anwesenheit von Fluid erkannt wird,
Bestimmen (210) der Art des Fluids unter Verwendung eines zweiten Algorithmus der künstlichen Intelligenz, der mit einem zweiten Trainingsdatensatz trainiert ist, der relevante digitale Bilder umfasst, die gemäß der Art des darin vorhandenen Fluids markiert sind,
Auswählen (220), gemäß der Art des Fluids, eines dritten Algorithmus der künstlichen Intelligenz aus einer Vielzahl von Algorithmen der künstlichen Intelligenz, die dazu konfiguriert sind, die Anwesenheit von Partikeln auf einer Fluidoberfläche zu erkennen,
Erkennen (500) der Anwesenheit von Partikeln in den Quellbildern, wobei die Partikel im Quellbild als eine Gruppe loser Einzelelemente abgebildet sind, die von einer Partikelkontur umschlossen sind, indem das Quellbild dem dritten Algorithmus der künstlichen Intelligenz zugeführt wird, der mit einem dritten Trainingsdatensatz trainiert ist, der relevante digitale Bilder umfasst, die gemäß der Anwesenheit oder Nichtanwesenheit von Partikeln auf einer Fluidoberfläche markiert sind, so dass der dritte Algorithmus der künstlichen Intelligenz die Anwesenheit von Partikeln durch Erkennen der Partikelkonturen im Quellbild identifiziert, und
wenn die Anwesenheit von Partikeln festgestellt wird,
Bestimmen (510) der Anzahl von Partikeln im Quellbild, indem das Quellbild einem vierten Algorithmus der künstlichen Intelligenz zugeführt wird, der mit einem vierten Trainingsdatensatz trainiert ist, der relevante digitale Bilder umfasst, die gemäß der Anzahl der auf einer Fluidoberfläche anwesenden Partikel markiert sind, wobei die Partikel im Quellbild innerhalb der Partikelkonturen abgebildet sind, und wobei der Schritt des Bestimmens (510) der Anzahl von Partikeln ferner die folgenden Schritte umfasst:
Identifizieren (511) der Partikelkonturen *mit Hilfe eines semantischen Segmentierungsalgorithmus, der von dem dritten und*/*oder dem vierten Algorithmus der künstlichen Intelligenz ausgeführt wird,*
Berechnen (512) der Fläche der Partikel gemäß der Anzahl der Pixel, die innerhalb der Partikelkonturen abgebildet sind, und
Ermitteln (513) einer Anzahl von Partikeln durch Teilen der Fläche der Partikel, die auf dem Quellbild abgebildet sind, durch eine durchschnittliche Fläche eines Partikels in Pixeln.

2. Verfahren nach dem vorhergehenden Anspruch, wobei das digitale Quellbild ferner zugeordnete Daten umfasst und wobei das Verfahren ferner den folgenden Schritt umfasst:
Hinzufügen (520) der bestimmten Anzahl von Partikeln zu den zugeordneten Daten.

3. Verfahren nach einem der vorhergehenden Ansprüche, wobei das Verfahren ferner den folgenden Schritt umfasst:
Verarbeiten (610) des Quellbildes, wobei das Verarbeiten des Quellbildes das Anwenden einer Überlagerung auf das Quellbild umfasst, wobei ein verarbeitetes Bild erhalten wird.

4. Verfahren nach einem der vorhergehenden Ansprüche, wobei das Verfahren ferner die folgenden Schritte umfasst: Erkennen (400) der Anwesenheit von Partikelstaub im Quellbild, indem das Quellbild einem fünften Algorithmus der künstlichen Intelligenz zugeführt wird, der mit einem fünften Trainingsdatensatz trainiert ist, der relevante digitale Bilder umfasst, die gemäß der Anwesenheit oder Nichtanwesenheit von Staub auf einer Fluidoberfläche markiert sind, und
wenn die Anwesenheit von Staub erkannt wird,
Bestimmen (410) der Menge an Partikelstaub, indem das Quellbild einem sechsten Algorithmus der künstlichen Intelligenz zugeführt wird, der mit einem sechsten Trainingsdatensatz trainiert ist, der relevante digitale Bilder umfasst, die gemäß der Menge an Partikelstaub, der auf einer Fluidoberfläche anwesend ist, markiert sind.

5. Verfahren nach dem vorhergehenden Anspruch, wobei der Partikelstaub im Quellbild innerhalb von Staubkonturen abgebildet ist und wobei der Schritt des Bestimmens (410) der Menge an Partikelstaub Folgendes umfasst:
Identifizieren (411) der Staubkonturen,
Berechnen (412) des Verhältnisses von Pixeln, die innerhalb der Staubkonturen abgebildet sind, in Bezug auf die Gesamtanzahl von Pixeln des Quellbildes, und
wenn das Staubverhältnis einen Schwellenwert überschreitet,
Bestätigen (413), dass die Partikelstauberkennung kein falsches Positiv ist.

6. Verfahren nach einem der Ansprüche 4-5, wobei mindestens ein Algorithmus, der aus dem ersten Algorithmus der künstlichen Intelligenz, dem zweiten Algorithmus der künstlichen Intelligenz, dem dritten Algorithmus der künstlichen Intelligenz, dem vierten Algorithmus der künstlichen Intelligenz, dem fünften Algorithmus der künstlichen Intelligenz und dem sechsten Algorithmus der künstlichen Intelligenz ausgewählt wird, ein künstliches neuronales Netzwerk, ein zur Durchführung von semantischer Segmentierung trainiertes neuronales Faltungsnetzwerk, ein zur Identifizierung von Objekten trainiertes neuronales Faltungsnetzwerk oder ein neuronales Klassifikationsnetzwerk verwendet, um die Partikelkonturen zu identifizieren (511).

7. Verfahren nach einem der Ansprüche 4-5, wobei mindestens ein Algorithmus, der aus dem ersten Algorithmus der künstlichen Intelligenz und dem zweiten Algorithmus der künstlichen Intelligenz ausgewählt wird, ein neuronales Klassifikationsnetzwerk verwendet und/oder mindestens ein Algorithmus, der aus dem dritten Algorithmus der künstlichen Intelligenz und dem vierten Algorithmus der künstlichen Intelligenz ausgewählt wird, ein zur Durchführung von semantischer Segmentierung trainiertes neuronales Faltungsnetzwerk oder ein zur Identifizierung von Objekten trainiertes neuronales Faltungsnetzwerk verwendet, um die Partikelkonturen zu identifizieren (511).

8. Verfahren nach einem der Ansprüche 4-5, wobei das digitale Quellbild ferner zugeordnete Daten umfasst und wobei das Verfahren ferner den folgenden Schritt umfasst:
Hinzufügen (420) der bestimmten Menge an Partikelstaub zu den zugeordneten Daten.

9. Verfahren nach einem der vorhergehenden Ansprüche, wobei das Verfahren ferner den folgenden Schritt umfasst:
Bestimmen (120) eines Satzes geografischer Koordinaten des Quellbildes aus den zugeordneten Daten.

10. Verfahren nach einem der vorhergehenden Ansprüche, wobei das Verfahren ferner den folgenden Schritt umfasst:
Generieren (620) einer Pixelmaske.

11. Verfahren nach einem der vorhergehenden Ansprüche, wobei das Verfahren ferner den folgenden Schritt umfasst:
Senden (700) des verarbeiteten Bildes und der zugeordneten Daten an einen Server des Computersystems (10), wobei die zugeordneten Daten des verarbeiteten Bildes die zugeordneten Daten des Quellbildes und die hinzugefügten Daten umfassen.

12. Verfahren nach dem vorhergehenden Anspruch, wobei das Fluid mindestens eines der folgenden ist:
Prozesswasser, Regenwasser, Abwasser.

13. Verfahren nach einem der vorhergehenden Ansprüche, wobei die Partikel eines oder mehrere der folgenden sind: Kunststoffgranulat, eine Konzentration von Kunststoffgranulat, Mikroplastik, Sand, Schlamm, Erde, pflanzliche Ablagerungen industriellen Ursprungs und Schutt.

14. Computersystem (10) zum Erkennen der Anwesenheit von Partikeln auf einer Oberfläche durch Ausführung eines Verfahrens nach einem der Ansprüche 1-13, wobei das System Folgendes umfasst:
mindestens eine Erkennungsvorrichtung (1) mit Bilderfassungsmitteln (2), die dazu konfiguriert sind, Bilder einer Oberfläche zu erhalten,
mindestens einen Server (3), der dazu konfiguriert ist, Bilder einer Oberfläche zu kombinieren, und Kommunikationsmittel, die dazu konfiguriert sind, eine Datenkommunikation mit einem Datennetzwerk zu ermöglichen.

## Revendications

1. Procédé mis en oeuvre par ordinateur pour détecter la présence de particules ayant un diamètre d'environ 5 mm ou moins et déterminer le nombre de particules dans une image source, l'image source étant une image numérique comprenant une pluralité de pixels et étant reçue provenant d'un dispositif de détection muni de moyens d'acquisition d'images, le procédé comprenant les étapes consistant à :
détecter (200) la présence d'un fluide dans l'image source en alimentant, avec l'image source, un premier algorithme d'intelligence artificielle entraîné avec un premier ensemble de données d'entraînement comprenant des images numériques pertinentes étiquetées selon la présence ou l'absence de présence d'un fluide, configuré pour détecter la présence d'un fluide dans une image, et
lorsque la présence de liquide est détectée,
déterminer (210) le type de fluide à l'aide d'un deuxième algorithme d'intelligence artificielle entraîné avec un deuxième ensemble de données d'entraînement comprenant des images numériques pertinentes étiquetées selon le type de fluide qui y est présent,
sélectionner (220), selon le type de fluide, un troisième algorithme d'intelligence artificielle parmi une pluralité d'algorithmes d'intelligence artificielle configurés pour détecter la présence de particules sur une surface de fluide, détecter (500) la présence de particules dans les images sources, les particules étant représentées dans l'image source comme un groupe d'éléments individuels détachés entourés d'un contour de particule, en alimentant, avec l'image source, le troisième algorithme d'intelligence artificielle entraîné avec un troisième ensemble de données d'entraînement comprenant des images numériques pertinentes étiquetées selon la présence ou l'absence de présence de particules sur une surface de fluide, de sorte que le troisième algorithme d'intelligence artificielle identifie la présence de particules en reconnaissant lesdits contours de particules dans l'image source et
lorsque la présence de particules est détectée,
déterminer (510) le nombre de particules dans l'image source en alimentant, avec l'image source, un quatrième algorithme d'intelligence artificielle entraîné avec un quatrième ensemble de données d'entraînement comprenant des images numériques pertinentes étiquetées selon le nombre de particules présentes sur une surface de fluide, les particules de l'image source étant représentées à l'intérieur des contours de particules, et dans lequel l'étape consistant à déterminer (510) le nombre de particules comprend en outre les étapes suivantes :
identifier (511) les contours des particules, *au moyen d'un algorithme de segmentation sémantique exécuté par le troisième et*/*ou le quatrième algorithme d'intelligence artificielle,*
calculer (512) l'aire des particules selon le nombre de pixels représentés à l'intérieur des contours des particules, et
obtenir (513) un nombre de particules en divisant l'aire des particules représentées sur l'image source par une aire moyenne d'une particule en pixels.

2. Procédé selon la revendication précédente, dans lequel l'image source numérique comprend en outre des données associées, et dans lequel le procédé comprend en outre l'étape consistant à :
ajouter (520) le nombre déterminé de particules aux données associées.

3. Procédé selon l'une quelconque des revendications précédentes, dans lequel le procédé comprend en outre l'étape consistant à :
traiter (610) l'image source, dans lequel le traitement de l'image source comprend l'application d'un calque sur l'image source, permettant d'obtenir une image traitée.

4. Procédé selon l'une quelconque des revendications précédentes, dans lequel le procédé comprend en outre les étapes consistant à :
détecter (400) la présence de poussière de particules dans l'image source en alimentant, avec l'image source, un cinquième algorithme d'intelligence artificielle entraîné avec un cinquième ensemble de données d'entraînement comprenant des images numériques pertinentes étiquetées selon la présence ou l'absence de présence de poussière sur une surface de fluide, et
lorsque la présence de poussière est détectée,
déterminer (410) la quantité de poussière de particules en alimentant, avec l'image source, un sixième algorithme d'intelligence artificielle entraîné avec un sixième ensemble de données d'entraînement comprenant des images numériques pertinentes étiquetées selon la quantité de poussière de particules présente sur une surface de fluide.

5. Procédé selon la revendication précédente, dans lequel la poussière de particules est représentée dans l'image source à l'intérieur des contours de poussière, et dans lequel l'étape de détermination (410) de la quantité de poussière de particules comprend :
identifier (411) les contours de poussière,
calculer (412) le rapport entre les pixels représentés à l'intérieur des contours de poussière et le nombre total de pixels de l'image source, et
lorsque le rapport de poussière dépasse un seuil,
confirmer (413) que la détection de poussière de particules n'est pas un faux positif.

6. Procédé selon l'une quelconque des revendications 4-5, dans lequel au moins un algorithme choisi parmi le premier algorithme d'intelligence artificielle, le deuxième algorithme d'intelligence artificielle, le troisième algorithme d'intelligence artificielle, le quatrième algorithme d'intelligence artificielle, le cinquième algorithme d'intelligence artificielle et le sixième algorithme d'intelligence artificielle utilise un réseau neuronal artificiel, un réseau neuronal convolutionnel entraîné pour effectuer une segmentation sémantique, un réseau neuronal convolutionnel entraîné pour identifier des objets ou un réseau neuronal de classification, en vue d'identifier (511) les contours des particules.

7. Procédé selon l'une quelconque des revendications 4-5, dans lequel au moins un algorithme choisi entre le premier algorithme d'intelligence artificielle et le deuxième algorithme d'intelligence artificielle utilise un réseau neuronal de classification et/ou au moins un algorithme choisi entre le troisième algorithme d'intelligence artificielle et le quatrième algorithme d'intelligence artificielle utilise un réseau neuronal convolutionnel entraîné pour effectuer une segmentation sémantique ou un réseau neuronal convolutionnel entraîné pour identifier des objets, en vue d'identifier (511) les contours des particules.

8. Procédé selon l'une quelconque des revendications 4-5, dans lequel l'image source numérique comprend en outre des données associées, et dans lequel le procédé comprend en outre l'étape consistant à :
ajouter (420) la quantité déterminée de poussière de particules aux données associées.

9. Procédé selon l'une quelconque des revendications précédentes, dans lequel le procédé comprend en outre l'étape consistant à :
déterminer (120) un ensemble de coordonnées géographiques de l'image source à partir des données associées.

10. Procédé selon l'une quelconque des revendications précédentes, dans lequel le procédé comprend en outre l'étape consistant à :
générer (620) un masque de pixels.

11. Procédé selon l'une quelconque des revendications précédentes, dans lequel le procédé comprend en outre l'étape consistant à :
envoyer (700) l'image traitée et les données associées à un serveur du système informatique (10), dans lequel les données associées de l'image traitée comprennent les données associées de l'image source et les données ajoutées.

12. Procédé selon la revendication précédente, dans lequel le fluide est au moins l'un parmi : de l'eau de traitement, de l'eau de pluie, des eaux usées.

13. Procédé selon l'une quelconque des revendications précédentes, dans lequel les particules sont l'un ou plusieurs parmi : des granulés de plastique, une concentration de granulés de plastique, des microplastiques, du sable, de la boue, de la terre, des débris végétaux d'origine industrielle et des gravats.

14. Système informatique (10) permettant de détecter la présence de particules sur une surface en exécutant un procédé selon l'une quelconque des revendications 1-13, dans lequel le système comprend :
au moins un dispositif de détection (1) avec des moyens d'acquisition d'images (2), configuré pour obtenir des images d'une surface,
au moins un serveur (3), configuré pour combiner les images d'une surface, et des moyens de communication configurés pour permettre une communication de données avec un réseau de données.
